# EUROPEAN PATENT APPLICATION

(11) **EP 4 851 220 A1**
(43) Date of publication of application: **09.12.2026**
(21) Application number: 25749069.8
(22) Date of filing: 31.01.2025
(51) Int. Cl.: C08G 75/08, C08G 18/38, G02B 27/02

(54) **RESIN SUBSTRATE, LIGHT GUIDE PLATE, WAVEGUIDE DEVICE, OPTICAL MEMBER FOR EYEWEAR, AND WEARABLE DEVICE**

(30) Priority: 01.02.2024 JP 2024013906
(71) Applicant: HOYA LENS THAILAND LTD., Pathumthani 12130 (TH)
(72) Inventor: MUKAIYAMA, Hiroyuki, Tokyo 160-8347 (JP); KOUSAKA, Masahisa, Tokyo 160-8347 (JP)
(74) Representative: Kraus & Lederer PartGmbB
(86) International application number: PCT/JP2025/003288
(87) International publication number: WO 2025/164783

(57) **Abstract**

A resin substrate according to an embodiment of the present disclosure contains an episulfide resin having a refractive index of 1.60 or more or a thiourethane resin having a refractive index of 1.60 or more. A light guide plate according to an embodiment of the present disclosure comprises the aforementioned resin substrate. A waveguide device according to an embodiment of the present disclosure is provided with the aforementioned light guide plate and a diffraction grating or a hologram element formed on the light guide plate. An optical component for eyewear according to an embodiment of the present disclosure includes a resin lens substrate and the aforementioned waveguide device. A wearable device according to an embodiment of the present disclosure is provided with the aforementioned optical component for eyewear.

## Description

### Technical Field

The present disclosure relates to a resin substrate, a light guide plate, a waveguide device, an optical component for eyewear, and a wearable device.

### Background Art

It has been proposed to use, in an augmented reality (AR) wearable device such as a head-mounted display, a light guide plate made of a glass substrate having a high refractive index from the viewpoint of enlarging a field of view (FOV) or the like (see, for example, PTL 1).

Projection light emitted from this type of AR wearable device is moved to the field of view of a device wearer through the light guide plate, an image of the projection light is formed by a diffraction grating or the like, and transmitted light from the outside is delivered together with the projection light to the vision of the device wearer, according to the structure.

### Citation List

### Patent Literature

PTL 1: Japanese Patent Application Publication No. 2022-97824

### Summary of Invention

### Technical Problem

Selection of a high-density (3.0 g/cm³ to 5.5 g/cm³) glass composition makes it possible to increase the refractive index of the glass substrate, which hinders reduction in the weight of the wearable device and leads to decreases in the production yield and processability of the glass substrate. Therefore, it has been studied to produce a light guide plate by a resin composition having a low density and a high refractive index.

Therefore, an object of the present disclosure is to provide a novel resin substrate, a light guide plate, a waveguide device, an optical component for eyewear, and a wearable device.

### Solution to Problem

A resin substrate according to an embodiment of the present disclosure contains an episulfide resin having a refractive index of 1.60 or more or a thiourethane resin having a refractive index of 1.60 or more.

A light guide plate according to an embodiment of the present disclosure includes the aforementioned resin substrate.

A waveguide device according to an embodiment of the present disclosure includes: the aforementioned light guide plate; and a diffraction grating or a hologram element formed on the light guide plate.

An optical component for eyewear according to an embodiment of the present disclosure includes: a resin lens substrate; and the aforementioned waveguide device.

A wearable device according to an embodiment of the present disclosure includes: the aforementioned optical component for eyewear.

### Advantageous Effects of Invention

The present disclosure can provide a novel resin substrate, a light guide plate, a waveguide device, an optical component for eyewear, and a wearable device.

### Brief Description of Drawings

[Fig. 1]

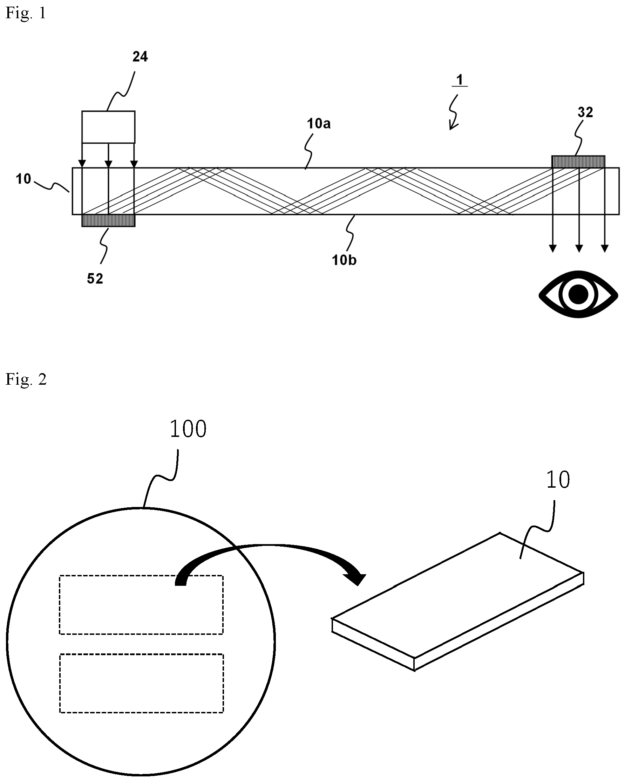

   Fig. 1 is a schematic sectional view illustrating an embodiment of a light guide plate according to a present embodiment.
[Fig. 2]
   Fig. 2 is a conceptual diagram illustrating an embodiment of a resin substrate according to the present embodiment.
[Fig. 3]

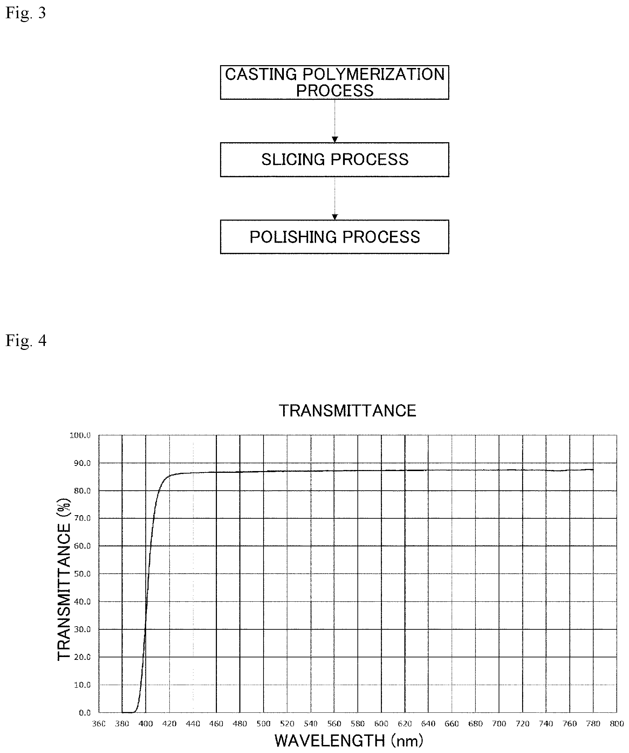

   Fig. 3 is a diagram illustrating a method for producing a resin substrate according to the present embodiment.
[Fig. 4]
   Fig. 4 is a diagram illustrating a transmittance of a resin substrate in Example 1.
[Fig. 5]

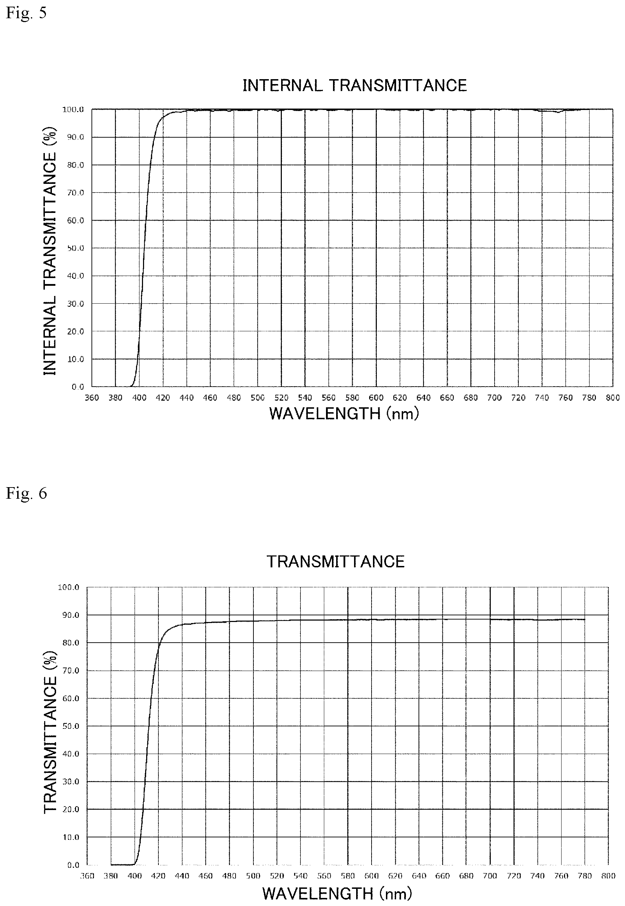

   Fig. 5 is a diagram illustrating an internal transmittance of the resin substrate in Example 1.
[Fig. 6]
   Fig. 6 is a diagram illustrating a transmittance of a resin substrate in Example 2.
[Fig. 7]

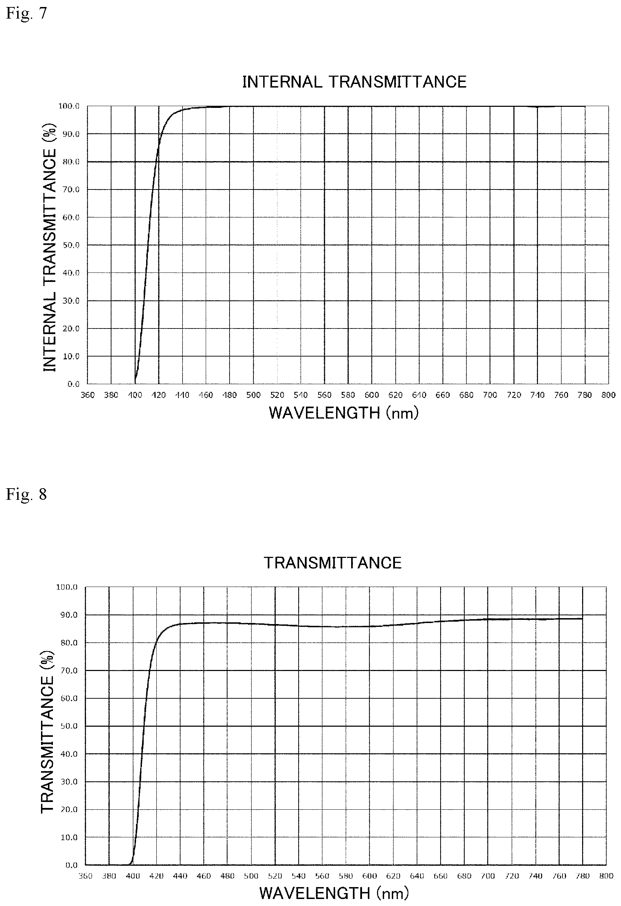

   Fig. 7 is a diagram illustrating an internal transmittance of the resin substrate in Example 2.
[Fig. 8]
   Fig. 8 is a diagram illustrating a transmittance of a resin substrate in Example 3.
[Fig. 9]

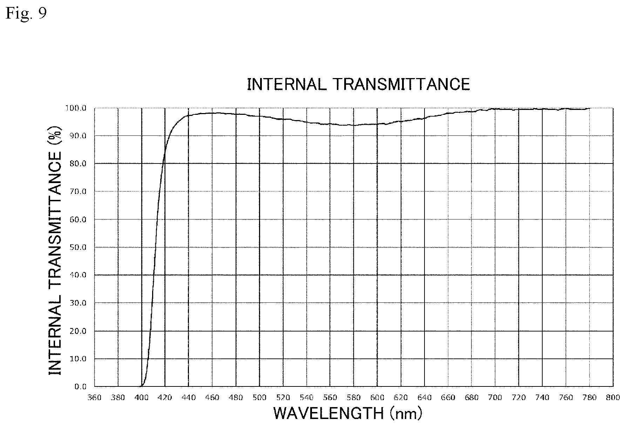

   Fig. 9 is a diagram illustrating an internal transmittance of the resin substrate in Example 3. Description of Embodiments

Hereinafter, embodiments of the present disclosure (hereinafter referred to as "the present embodiment") will be described in detail, but the present invention is not limited thereto, and can be variously modified within the scope not departing from the gist of the invention. Here, in this specification, for example, the expression of a numerical value range of "1 to 100" encompasses both the lower limit value "1" and the upper limit value "100." In addition, the same applies to the expression of other numerical value ranges.

### [Waveguide Device]

Fig. 1 is a schematic sectional view illustrating an embodiment of a waveguide device according to a present embodiment. A waveguide device 1 includes a light guide plate 10 containing a resin, a diffraction grating 52, and a diffraction grating 32. Each of the diffraction gratings 52 and 32 is formed on a main surface of the light guide plate 10 on each side. Light with each wavelength is introduced from an image display device 24 to the diffraction grating 52.

The image display device 24 is, for example, a transmission type liquid crystal (LCD T-LCOS) panel driven by a field sequential method. The image display device 24 modulates the light with each wavelength in accordance with an image signal generated by an image engine (not illustrated) of a signal processing device 5. The light with each wavelength which has been modulated by pixels in an effective area of the image display device 24 is made incident on the light guide plate 10 with a predetermined light flux section (having substantially the same shape as the effective area). It should be noted that the image display device 24 may be replaced by a display element in another form such as digital mirror device (DMD), a reflection type liquid crystal (LCOS) panel, micro electro mechanical system (MEMS), an organic electro-luminescence (EL), or an inorganic EL, for example.

As illustrated in Fig. 1, the diffraction grating 52 is laminated on a second surface 10b of the light guide plate 10. On the diffraction grating 52, a pitch of an interference fringe pattern, for example, may be formed. Note that a hologram element may be used as the diffraction grating 52.

The light with each wavelength modulated by the image display device 24 is sequentially incident from a first surface 10a into the light guide plate 10.

The diffraction grating 52 diffracts the sequentially incident light with each wavelength at a predetermined angle in order to guide the light to the eyes of a wearer. The light with each wavelength diffracted by the diffraction grating 52 repeats total reflection at the interface between the light guide plate 10 and air, propagates inside the light guide plate 10, and is then incident on the diffraction grating 32.

The light with each wavelength incident on the diffraction grating 32 is diffracted by the diffraction grating 32 and is sequentially emitted from the second surface 10b of the light guide plate 10 to the outside in a substantially orthogonal direction. An image of the light with each wavelength which has been emitted as substantially parallel light is formed on the retina of the wearer as a virtual image I of an image generated by the image display device 24.

### <Light Guide Plate>

The light guide plate 10 in the waveguide device 1 according to the present embodiment contains a resin. By using a substrate containing a resin as a substrate, a material having a relatively low density while having a high refractive index can be used, and the weight of the wearable device can thus be reduced.

Although the shape of the substrate of the light guide plate is not particularly limited, the substrate may be a quadrilateral plate.

### [Resin Base]

The aforementioned light guide plate may be shaped from a resin into a desired shape, or may be created by cutting it out from a resin substrate. Fig. 2 is a diagram illustrating a substantial shape of the resin substrate according to the present embodiment. A resin substrate 100 has a disk shape. A substrate 10 of a light guide plate is cut out from the resin substrate 100 and is used.

The thickness of the resin substrate is preferably 0.1 mm to 2.0 mm, is more preferably 0.2 mm to 1.5 mm, and is further preferably 0.3 mm to 1.0 mm. Note that the thickness of the resin substrate corresponds to that of the light guide plate. Note that the thickness of the resin substrate or the substrate of the light guide plate can be measured using an ultrasonic thickness meter.

Although the shape of the resin substrate according to the present embodiment is not particularly limited, the resin substrate may be a disk. Although the diameter of the disk is not particularly limited, the diameter may be, for example, 50 mm to 450 mm, or 60 mm to 150 mm. The resin substrate according to the present embodiment may have a shape in which base curves such as a convex surface and a concave surface are not formed as in the lens substrate, and may have a flat plate shape, for example.

Examples of the resin used for the resin substrate include an episulfide resin and a urethane resin.

### (Episulfide Resin)

The episulfide resin is a cured product of a polymerizable composition containing an epithio compound. Here, the polymerizable composition may contain other monomers.

The episulfide resin preferably has an elemental composition in which an oxygen atom content is 10% by mass or less. If the monomer is blended in such that the content of oxygen atoms to which polarity can be easily imparted is 10% by mass or less in the resin, then a resin becomes hydrophobic, and a resin having excellent weather resistance can be obtained. The oxygen atom content of the episulfide resin is preferably 8% by mass or less, is more preferably 5% by mass or less, and is further preferably 3% by mass or less, and the oxygen content in the episulfide resin can be measured by elemental analysis.

Examples of an epithio compound include bis(β-epithiopropyl)sulfide and bis(β-epithiopropyl)disulfide.

The content of the epithio compound in the polymerizable composition is preferably 50% by mass to 98% by mass, is more preferably 60% by mass to 96% by mass, and is further preferably 70% by mass to 96% by mass.

The polymerizable composition that forms the episulfide resin preferably contains, in addition to the epithio compound, a thioether compound having a mercapto group. The polymerizable composition containing a thioether compound having a mercapto group can enhance transparency of the resulting episulfide resin.

The thioether compound having a mercapto group preferably does not contain an oxygen atom.

The thioether compound having a mercapto group is preferably a compound having a cyclic thioether skeleton.

The thioether compound having a mercapto group is preferably a compound represented by Formula (T1): 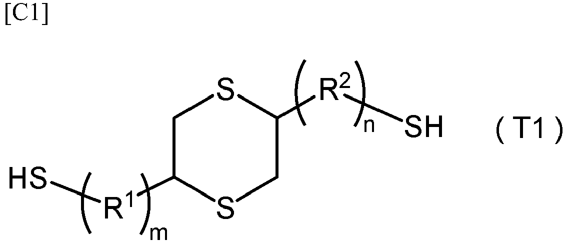 (where
R¹ and R² are each independently a divalent hydrocarbon group having 1 to 6 carbon atoms, and
m and n are each independently 0 or 1).

Specific examples of the thioether compound having a mercapto group include bis(mercaptoethylthio)mercaptopropane, bis(mercaptomethyl)-3,6,9-trithiaundecanedithiol, dimercaptoethyl sulfide, bis(mercaptoethyl)dithiane, and bis(mercaptomethyl)dithiane. The thioether compound having a mercapto group preferably includes at least one kind selected from the group consisting of them.

Among the above examples, the episulfide resin is preferably a cured product of a polymerizable composition containing an epithio compound having a thioether bond or a dithioether bond and bis(mercaptomethyl)dithiane.

The content of the thioether compound having a mercapto group is 10% by mass to 20% by mass, is more preferably 12% by mass to 19% by mass, and is yet more preferably 13% by mass to 18% by mass with respect to the total amount of the polymerizable composition.

The polymerizable composition preferably further contains elemental sulfur in combination with the epithio compound. The content of the elemental sulfur in the polymerizable composition is preferably 1% by mass to 30% by mass, is more preferably 5% by mass to 20% by mass, and is further preferably 10% by mass to 20% by mass or more.

The polymerizable composition preferably contains a polymerization catalyst. Examples of the polymerization catalyst include tin compounds such as dibutyltin diacetate, dibutyltin dilaurate, dibutyltin dichloride, and dimethyltin dichloride, nitrogen-containing compounds such as tertiary amines, quaternary ammonium salts, imidazole-based compounds, and pyrazole-based compounds, and phosphorus-containing compounds such as tetrabutylphosphonium bromide.

In a case where the epithio compound is contained, the amount of polymerization catalyst added to the polymerizable composition is preferably 0.001 parts by mass to 2 parts by mass, is more preferably 0.005 parts by mass to 1 part by mass, and is further preferably 0.01 parts by mass to 0.5 parts by mass with respect to 100 parts by mass of the total amount of the epithio compound.

### (Urethane Resin)

The urethane resin is a cured product of a polymerizable composition containing an isocyanate component and an active hydrogen compound component. Examples of urethane resins include a thiourethane resin having a polymerization moiety of an isocyanate component and a polythiol component; a thiourethane resin having a polymerization moiety of an isocyanate component and a polyol component; and a urethane urea resin having a polythiourethane moiety which is a polymerization moiety of an isocyanate component and a thiol component and a polyurea moiety which is a polymer of an isocyanate component and a polyamine component.

Examples of the isocyanate component include bis(isocyanatomethyl)bicyclo[2.2.1]heptane, bis(isocyanatomethyl)cyclohexane, bis(isocyanatomethyl)benzene, tolylene diisocyanate, diphenylmethane diisocyanate, dicyclohexylmethane diisocyanate, hexamethylene diisocyanate, and pentamethylene diisocyanate.

Examples of the active hydrogen compound component include toluene diamine, pentaerythritol tetrakis mercaptoacetate, pentaerythritol tetrakis mercaptopropionate, trimethylolpropane trismercaptoacetate, trimethylolpropane trismercaptopropionate, bis(mercaptoethylthio)mercaptopropane, bis(mercaptomethyl)-3,6,9-trithiaundecanedithiol, dimercaptoethyl sulfide, bis(mercaptoethyl)dithiane, and bis(mercaptomethyl)dithiane. Among these, a polythiol component such as pentaerythritol tetrakis mercaptoacetate, pentaerythritol tetrakis mercaptopropionate, trimethylolpropane trismercaptoacetate, trimethylolpropane trismercaptopropionate, bis(mercaptoethylthio)mercaptopropane, bis(mercaptomethyl)-3,6,9-trithiaundecanedithiol, dimercaptoethyl sulfide, bis(mercaptoethyl)dithiane, or bis(mercaptomethyl)dithiane is preferably used.

The equivalent ratio of the active hydrogen groups in the active hydrogen compound component to isocyanato groups in the polyisocyanate component (active hydrogen groups/isocyanato groups) is preferably 40/60 to 60/40, and is more preferably 45/55 to 55/45. Examples of the active hydrogen group include a hydroxy group, a mercapto group, and an -NH group.

The resin substrate may contain other additives such as an ultraviolet absorber, a mold releasing agent, a coloring agent, an antioxidant, a refractive index modifier, a birefringence modifier, an anti-coloring agent, and a fluorescent brightening agent. These may be used alone or two or more thereof may be used.

The resin substrate preferably contains an ultraviolet absorber. The inclusion of the ultraviolet absorber makes it possible to improve weather resistance of the resin substrate and the resin light guide plate, prevent aging and yellowing, and maintain transparency at the time of use.

Examples of the ultraviolet absorber include a benzotriazole-based compound, a benzophenone-based compound, dibenzoylmethane, and 4-tert-butyl-4'-methoxybenzoylmethane. Among these, a benzotriazole compound is preferable.

The resin substrate preferably further contains, as the benzophenone-based compound, an ultraviolet absorber represented by Formula (1): 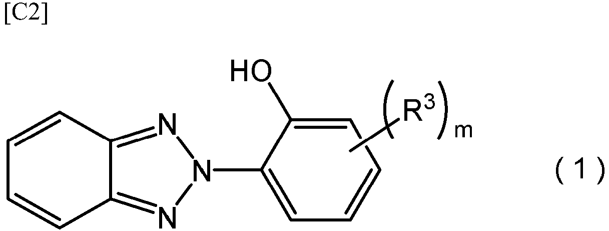 (where
R³ is an alkyl group having 1 to 20 carbon atoms or an alkoxy group having 1 to 20 carbon atoms, and
m is an integer of 1 to 2). By using the ultraviolet absorber, it is possible to suppress deterioration of image information passing through the light guide plate with little absorption in the visible light region while suppressing deterioration of resin due to absorption of high-energy light.

R³ is preferably an alkoxy group having 1 to 20 carbon atoms. The number of carbon atoms in the alkoxy group of R³ is preferably 1 to 20, is more preferably 3 to 18, and is further preferably 6 to 16. Examples of the alkoxy group of R³ include a methoxy group, an ethoxy group, a propyloxy group, a hexyloxy group, an octyloxy group, a dodecenyloxy group, and a lauryloxy group.

The number of carbon atoms in the alkoxy group of R³ is preferably 1 to 20, is more preferably 3 to 18, and is further preferably 6 to 16. Examples of the alkyl group of R³ include a methyl group, an ethyl group, a propyl group, a tertiary butyl group, a hexyl group, an octyl group, a dodecenyl group, and a lauryl group.

m is preferably 1.

Examples of the benzotriazole compound include 2-(2-hydroxy-5-methylphenyl)-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole. One kind of these may be used alone, or two or more kinds of these may be used in combination. Among these, 2-(2-hydroxy-4-octyloxyphenyl)-2H-benzotriazole is preferable.

Examples of the benzophenone compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, 2,2'-dihydroxy-4-methoxybenzophenone, and the like.

The amount of the ultraviolet absorber to be added is preferably 0.001% by mass to 5% by mass, is more preferably 0.01% by mass to 3% by mass, and is further preferably 0.05% by mass to 1% by mass with respect to the entire substrate.

In the resin substrate, the content of the coloring agent (hereinafter, also referred to as a "coloring agent L") having a maximum absorption wavelength in the range of 550 nm or more and 600 nm or less in 20 ppm by mass of toluene solution is preferably 0.1% by mass or less from the viewpoint of obtaining a resin substrate having a high internal transmittance.

From the viewpoint of obtaining a slightly bluish resin substrate with a favorable color tone, the coloring agent L has a maximum absorption wavelength of 550 nm or more and 600 nm or less in 20 ppm by mass of toluene solution. Here, 20 ppm by mass in a toluene solution means the proportion of the solute with respect to the entire toluene solution.

In addition, from the viewpoint of obtaining a slightly bluish lens substrate with a favorable color tone, the maximum absorption wavelength of the coloring agent L is preferably 550 nm or more, is more preferably 560 nm or more, and is yet more preferably 580 nm or more. Here, from the viewpoint of obtaining a slightly bluish resin composition with a favorable color tone, the maximum absorption wavelength of the coloring agent L is preferably 600 nm or less, and is more preferably 590 nm or less.

Examples of coloring agents L include C.I. Solvent Violet 11, 13, 14, 26, 31, 33, 36, 37, 38, 45, 47, 48, 51, 59, and 60; and C.I. Disperse Violet 26, 27, 28. Among these, C.I. Disperse Violet 27 and C.I. Solvent Violet 13, 31 are preferable, and in consideration of high stability and little change in the color tone even when the polymerizable composition is polymerized, C.I. Disperse Violet 27 and C.I. Solvent Violet 13 are more preferable, and C.I. Disperse Violet 27 is still more preferable.

The content of the coloring agent L is preferably 0.01% by mass or less, is more preferably 0.001% by mass or less, and is further preferably 0.001% by mass or less.

Examples of the antioxidant include a phenol-based antioxidant, a sulfur-based antioxidant, and a phosphorus-based antioxidant.

Examples of the phenol-based antioxidant include 2,6-di-t-butyl-4-methylphenol and phenol. Examples of the sulfur-based antioxidant include dilauryl 3,3'-thiodipropionate. Examples of the phosphorus-based antioxidant include phosphite compounds such as triphenyl phosphite, trioctyl phosphite, and tridecyl phosphite. One kind of these antioxidants may be used alone, or two or more kinds thereof may be used in combination.

The amount of the antioxidant to be added is preferably 0.01% by mass to 5% by mass, is more preferably 0.05% by mass to 3% by mass, and is further preferably 0.1% by mass to 2% by mass with respect to the entire substrate.

The resin substrate preferably contains a refractive index modifier. The inclusion of the refractive index modifier makes it possible to improve the refractive index of the resin light guide plate and to increase the field of view even in a case where a resin having a low refractive index is used.

Examples of the refractive index modifier include inorganic particles. Examples of a material for the inorganic particles include silica, alumina, zirconia, titania, and zeolite. The inorganic particles are preferably surface-modified by a silane coupling agent, and the particle diameter thereof is preferably 100 nm or less. The particle diameter of the inorganic particles is preferably 5 nm to 40 nm, is more preferably 10 nm to 35 nm, and is further preferably 10 nm to 30 nm. The particle diameter of the inorganic particles means the average particle diameter.

If the amount of the refractive index modifier to be added increases, then the density of the material of the entire substrate increases, making it impossible to reduce the weight of the light guide plate. In addition, in a case where the inorganic particles are added as a refractive index modifier at a ratio of 20 parts by mass or more with respect to 100 parts by mass of the substrate resin, which may lower fluidity of the resin itself, may cause internal stress due to orientation of the material, and may cause birefringence. Therefore, the amount of the refractive index modifier is preferably 0.1 parts by mass to 15 parts by mass, is more preferably 0.1 parts by mass to 10 parts by mass, and is further preferably 0.1 parts by mass to 5 parts by mass with respect to 100 parts by mass of the resin of the substrate.

The resin substrate preferably contains a birefringence modifier. The inclusion of the birefringence modifier makes it easy to adjust the retardation value to be 30 nm or less.

Examples of the birefringence modifier include a triazine-based birefringence modifier and a birefringence modifier composed of a compound having a fluorene skeleton. Examples of the triazine-based birefringence modifiers include 2-hydroxyphenyl-s-triazine derivatives. Commercially available products of the triazine-based birefringence modifier include Tinuvin 1600, Tinuvin 460, Tinuvin 477, Tinuvin 479, and Tinuvin 1577 from BASF, LA-F70 and LA46 from ADEKA, and the like.

The amount of the birefringence modifier to be added is preferably 1 part by mass to 30 parts by mass, is more preferably 5 parts by mass to 20 parts by mass, and is further preferably 10 parts by mass to 15 parts by mass with respect to 100 parts by mass of resin of the substrate.

The density of the resin used in the resin substrate is preferably 0.93 g/cm³ to 2.10 g/cm³, is more preferably 1.20 g/cm³ to 1.80 g/cm³, and is further preferably 1.30 g/cm³ to 1.50 g/cm³. The density within this range makes it possible to reduce the weight of the light guide plate. The density of the resin can be measured by an underwater displacement method in accordance with JIS K7112-1: 2023.

The refractive index of the resin used in the resin substrate is preferably 1.60 or more, is more preferably 1.65 or more, and is further preferably 1.70 or more. Although the upper limit of the refractive index of the resin is not particularly limited, the upper limit is, for example, 2.00 or less. The refractive index of the substrate falling within the above range can widen the field of view. The refractive index can be measured in accordance with JIS K7142: 2014.

From the viewpoint of suppressing influences on the color tone of an image passing through the light guide plate, an average internal transmittance IT₄₂₀₋₇₈₀ of light with a wavelength of 420 nm to 780 nm in the resin substrate is preferably 95% or more, is more preferably 97% or more, and is further preferably 98% or more.

The average internal transmittance IT₄₂₀₋₇₈₀ means the average value of the internal transmittance IT_{w} of light with the wavelength of 420 nm to 780 nm. The internal transmittance IT_{w} is calculated by the following expression for each wavelength by producing two samples having different thicknesses. [Math 1] $log {IT}_{w} = - \frac{log {T}_{w 1} - log {T}_{w 2}}{Δd} \times 10$ where T_{w1} is transmittance of light with a wavelength w (nm) in the measurement sample having a specific thickness, T_{w2} is transmittance of light with a wavelength w (nm) in a measurement sample having a greater thickness than T_{w1}, Δd is a thickness difference (mm) between T_{w2} and T_{w1}. The aforementioned internal transmittance IT_{w} means the internal transmittance in the case of the thickness of the 10 mm. The transmittance of light with each wavelength can be measured using an ultraviolet visible near-infrared spectrophotometer "UH4150" (trade name, Hitachi High-Tech Corporation). It should be noted that the average internal transmittance IT₄₂₀₋₇₈₀ is achieved by using a small-coloration material as a resin material and by not containing a dye such as a bluing agent.

From the viewpoint of suppressing influences of the internal transmittance IT_{w} on the color tone of the image passing through the light guide plate in the resin substrate, the internal transmittance is preferably 83% or more for light with a wavelength of 420 nm to 780 nm. From the viewpoint of further suppressing influences on the color tone of the image passing through the light guide plate, the internal transmittance IT_{w} is more preferably 85% or more, is further preferably 90% or more, and is yet further preferably 95% or more for light with a wavelength of 420 nm to 780 nm. The method of measuring the internal transmittance IT_{w} is as described above. Note that the condition of the internal transmittance IT_{w} is achieved by using a small-coloration material as the resin material and by not containing a dye such as a bluing agent.

From the viewpoint of suppressing influences on the color tone of the image passing through the light guide plate in the resin substrate, the average internal transmittance IT₅₅₀₋₆₅₀ of light with a wavelength of 550 nm to 650 nm is preferably 95% or more, is more preferably 96% or more, and is further preferably 98% or more. The average internal transmittance IT₅₅₀₋₆₅₀ means the average of the internal transmittance IT_{w} of light with the wavelength of 420 nm to 780 nm. The measuring method and the calculating method thereof are the same as those of the aforementioned average internal transmittance IT₄₂₀₋₇₈₀ except that the wavelength ranges of the light are different.

From the viewpoint of further suppressing influences on the color tone of the image passing through the light guide plate, the value of (IT₄₂₀₋₇₈₀ - IT₅₅₀₋₆₅₀)/IT₄₂₀₋₇₈₀ is preferably 5% or less, is more preferably 3% or less, and is further preferably 1% or less. The value is calculated from the average internal transmittance IT₄₂₀₋₇₈₀ and the average internal transmittance IT₅₅₀₋₆₅₀ described above.

From the viewpoint of improving light resistance of the resin, the average internal transmittance IT₃₀₀₋₃₈₀ of light with a wavelength of 300 nm to 380 nm in the resin substrate is preferably 50% or less, is more preferably 30% or less, is further preferably 10% or less, and is yet further preferably 1% or less. The average internal transmittance IT₃₀₀₋₃₈₀ means the average value of the internal transmittance IT_{w} of light with a wavelength of 300 nm to 380 nm. The measuring method and the calculating method thereof are the same as those of the aforementioned average internal transmittance IT₄₂₀₋₇₈₀ except that the wavelength ranges of the light are different.

From the viewpoint of improving light resistance of the resin, the average internal transmittance IT₃₀₀₋₃₂₀ of light with a wavelength of 300 nm to 320 nm in the resin substrate is preferably 30% or less, is more preferably 10% or less, is further preferably 1% or less, and is yet further preferably 0.1% or less. The average internal transmittance IT₃₀₀₋₃₂₀ means the average value of the internal transmittance IT_{w} of light with a wavelength of 300 nm to 320 nm. The measuring method and the calculating method thereof are the same as those of the aforementioned average internal transmittance IT₄₂₀₋₇₈₀ except that the wavelength ranges of the light are different.

The parallelism of the resin substrate is preferably 10 µm or less, is more preferably 1 µm or less, is further preferably 0.5 µm or less, and is yet further preferably 0.1 µm or less. The parallelism falling within this range can make it possible to obtain satisfactory performance as the light guide plate. Although the lower limit value of the parallelism of the resin substrate is not particularly limited, the lower limit value may be 0.01 µm or more, for example. The parallelism is defined in JIS B 0621-1984 and is measured by a three-dimensional measuring instrument.

The flatness of the resin substrate is preferably 25.0 µm or less, is more preferably 20.0 µm or less, is further preferably 12.0 µm or less, and is yet further preferably 10.0 µm or less. Although the lower limit of the flatness is not particularly limited, the lower limit is, for example, 0.1 µm or more. For the flatness, the flatness of one surface of the substrate is measured, and the value tends to increase when the substrate is curved or warps. The flatness can be measured using a flatness tester (FT-15) manufactured by Nidek Corporation. Removal of the residual stress allows the substrate flatness value of the resin substrate to be adjusted to a small value.

TTV of the resin substrate is preferably 3 µm or less, is more preferably 1 µm or less, and is further preferably 0.5 µm or less. Although the lower limit of TTV is not particularly limited, the lower limit may be, for example, 0.01 µm or more. The term "TTV" means the difference (that is, a total thickness variation (TTV)) between the maximum value and the minimum value of the thickness (that is, the distance between the first surface 10a and the second surface 10b of the substrate of the light guide plate). TTV can be measured by a bow/warp measuring apparatus SBW-331ML/d manufactured by Kobelco Research Institute, Inc.

The resin substrate is preferably for the cross reality device light guide plate. Cross reality is a technology of fusing images in the real and virtual worlds, and is a comprehensive generic term for virtual reality (VR), augmented reality (AR), and mixed reality (MR). The cross reality device is a device used for the cross reality, and includes, for example, a head-mounted display. As described above, a light guide plate is used in the cross reality device to project images on the retina of the wearer. The resin substrate according to the present embodiment is preferably used for the light guide plate. A substrate to be used for the light guide plate is cut out from the resin substrate according to the present embodiment and used.

Examples of the resin substrate according to the present embodiment include a casting polymerization method in which the resin substrate is obtained by casting and polymerizing a polymerizable composition, and an injection molding method in which a molten resin is injected into a mold.

In the case of the casting polymerization method as illustrated in Fig. 3, the method for producing the resin substrate includes a casting polymerization process of obtaining the resin substrate by casting and polymerizing the polymerization composition, may further include a slicing process of slicing the resin substrate to obtain the resin substrate with a desired thickness, and may further include an annealing process of removing a residual stress through heat treatment and a polishing process of performing polishing by a polishing device for the purpose of obtaining predetermined roughness and flatness of the resin substrate and further reducing variations in distribution of the residual stress.

Specifically, a raw material solution for the resin substrate is injected into a cavity, which is formed by two molds disposed at a predetermined interval. The resin substrate is formed by a curing reaction of the raw material solution, and the resin substrate is released from the mold. Subsequently, the released resin substrate is sliced using a wire saw to a predetermined thickness of 0.3 mm to 2.0 mm, and is then polished by a polishing device with a sufficient margin until wire saw marks disappear, thereby obtaining a resin substrate having a thickness of 0.1 mm to 1.5 mm. Note that the released resin substrate may be cut along its outer periphery to form a smooth surface as required, and may then be sliced by the wire saw.

Any polishing device can be used as long as it is possible to perform polishing without giving anisotropy to the substrate surface, and specifically, a lapping and polishing device can be preferably used.

It is possible to remove scratches and residual stress on the surface of the resin substrate by disposing the resin substrate on a flat surface plate, pouring a slurry of alumina, silica, or the like, and pressing and rotating the surface plate and the resin substrate under a predetermined pressure to polish them. Although for polishing the resin substrate, both a single-side polishing device and a double-side polishing device can be used, processing marks produced on both sides of the substrate such as wire saw marks and the residual stress can be uniformly removed, and the flatness can be reduced to a small value.

### [Optical Component for Eyewear]

The optical component for eyewear according to the present embodiment includes a resin lens substrate and the waveguide device according to the present embodiment.

Note that the refractive index (RW) of the light guide plate is larger than the refractive index (RT) of the lens substrate. The difference (RW - RT) between the refractive index (RW) of the light guide plate and the refractive index (RT) of the translucent substrate is preferably 0.2 to 1.0, is more preferably 0.3 to 0.8, and is further preferably 0.3 to 0.5.

Although the optical component for eyewear is not particularly limited as long as it can be applied to a wearable device, a spectacle lens applicable to a spectacle-type wearable device may be adopted. In this case, the translucent substrate has the shape of an spectacle lens substrate. The spectacle lens substrate does not necessarily have a spherical surface and may be a flat plate having a shape suitable for an spectacle frame.

### [Wearable Device]

As a wearable device using the light guide plate according to the present embodiment, a head-mounted display can be listed, for example. The head-mounted display includes, for example, a spectacle-type frame that is attached to the head of the wearer and the optical component for eyewear according to the present embodiment attached inside the frame. A backlight for illuminating an image, a signal processing device for projecting an image, a speaker for reproducing sound, and the like may be attached to the spectacle-type frame.

As described above, the present disclosure provides the following embodiments.
<1> A resin substrate including: an episulfide resin having a refractive index of 1.60 or more.
<2> The resin substrate according to <1>, in which the episulfide resin has an elemental composition in which an oxygen atom content is 10% by mass or less.
<3> The resin substrate according to <1> or <2>, in which the episulfide resin is a cured product of a polymerizable composition containing an epithio compound having a thioether bond or a dithioether bond.
<4> The resin substrate according to <3>, in which a content of the epithio compound is 80% by mass to 95% by mass with respect to a total amount of the polymerizable composition.
<5> The resin substrate according to <4>, in which the polymerizable composition contains a thioether compound having a mercapto group.
<6> The resin substrate according to <5>, in which the thioether compound contains at least one kind selected from the group consisting of bis(mercaptoethylthio)mercaptopropane, bis(mercaptomethyl)-3,6,9-trithiaundecanedithiol, dimercaptoethylsulfide, bis(mercaptoethyl)dithiane, and bis(mercaptomethyl)dithiane.
<7> The resin substrate according to <6>, in which the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.
<8> The resin substrate according to any one of <5> to <7>, in which a content of the thioether compound is 10% by mass to 20% by mass with respect to a total amount of the polymerizable composition.
<9> The resin substrate according to any one of <1> to <8>, in which the episulfide resin is a cured product of a polymerizable composition containing an epithio compound having a thioether bond or a dithioether bond and a compound represented by Formula (T1): 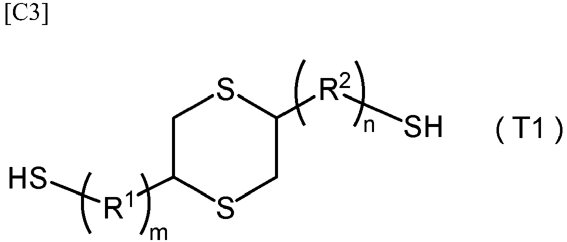 (where
   R¹ and R² are each independently a divalent hydrocarbon group having 1 to 6 carbon atoms, and
   m and n are each independently 0 or 1).
<10> The resin substrate according to any one of <1> to <9>, in which the episulfide resin is a cured product of a polymerizable composition containing an epithio compound having a thioether bond or a dithioether bond and bis(mercaptomethyl)dithiane.
<11> The resin substrate according to any one of <3> to <10>, in which the polymerizable composition contains elemental sulfur.
<12> A resin substrate including: a thiourethane resin having a refractive index of 1.60 or more.
<13> The resin substrate according to <12>, in which the thiourethane resin has an elemental composition in which an oxygen atom content is 20% or less.
<14> The resin substrate according to <12> or <13>, in which the thiourethane resin is a cured product of an isocyanate component containing an alicyclic polyisocyanate and a polythiol component.
<15> The resin substrate according to <14>, in which the alicyclic polyisocyanate is a cured product of an isocyanate component containing at least one kind selected from the group consisting of bis(isocyanatomethyl)bicyclo[2.2.1]heptane, bis(isocyanatomethyl)cyclohexane, and dicyclohexylmethane diisocyanate and a polythiol component.
<16> The resin substrate according to <14> or <15>, in which the polythiol component is a thioether compound having a mercapto group.
<17> The resin substrate according to <16>, in which the polythiol component contains at least one kind selected from the group consisting of bis(mercaptoethylthio)mercaptopropane, bis(mercaptomethyl)-3,6,9-trithiaundecanedithiol, dimercaptoethylsulfide, and bis(mercaptomethyl)dithiane.
<18> The resin substrate according to <17>, in which the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.
<19> The resin substrate according to any one of <1> to <18>, in which a content of a coloring agent having a maximum absorption wavelength of 550 nm or more and 600 nm or less in 20 ppm by mass of a toluene solution is 0.1% by mass or less.
<20> The resin substrate according to any one of <1> to <19>, further including: a ultraviolet absorber represented by Formula (1): 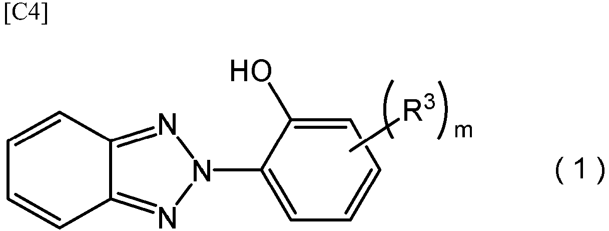 (where
   R³ is an alkyl group having 1 to 20 carbon atoms or an alkoxy group having 1 to 20 carbon atoms, and
   m is an integer of 1 to 2).
<21> The resin substrate according to any one of <1> to <20>, in which an average internal transmittance IT₄₂₀₋₇₈₀ of light with a wavelength of 420 nm to 780 nm is 95% or more.
<22> The resin substrate according to any one of <1> to <21>, in which an internal transmittance IT_{w} is 83% or more for light with a wavelength of 420 nm to 780 nm.
<23> The resin substrate according to any one of <1> to <22>, in which an average internal transmittance IT₃₀₀₋₃₈₀ of light with a wavelength of 300 nm to 380 nm is 50% or less.
<24> The resin substrate according to any one of <1> to <23>, in which an average internal transmittance IT₃₀₀₋₃₂₀ of light with a wavelength of 300 nm to 320 nm is 30% or less.
<25> The resin substrate according to any one of <1> to <24>, in which an average internal transmittance IT₅₅₀₋₆₅₀ of light with a wavelength of 550 nm to 650 nm is 95% or more.
<26> The resin substrate according to any one of <1> to <25>, in which a value of (IT₄₂₀₋₇₈₀ - IT₅₅₀₋₆₅₀)/IT₄₂₀₋₇₈₀ is 5% or less.
<27> The resin substrate according to any one of <1> to <26>, in which a parallelism of the resin substrate is 10 µm or less.
<28> The resin substrate according to any one of <1> to <27>, in which a thickness of the resin substrate is 0.1 mm to 2.0 mm.
<29> The resin substrate according to any one of <1> to <28>, in which the resin substrate is used for a cross reality device light guide plate.
<30> A light guide plate including: the resin substrate according to any one of <1> to <29>.
<31> A waveguide device including: the light guide plate according to <30>; and a diffraction grating or a hologram element formed on the light guide plate.
<32> An optical component for eyewear including:
   a resin lens substrate; and
   the waveguide device according to <31>.
<33> A wearable device including: the optical component for eyewear according to <32>.
<40> A resin substrate including: a resin having a refractive index of 1.60 or more,
   in which an average internal transmittance IT₄₂₀₋₇₈₀ of light with a wavelength of 420 nm to 780 nm is 95% or more.
<41> The resin substrate according to any one of <40>, in which an internal transmittance IT_{w} is 83% or more for light with a wavelength of 420 nm to 780 nm.
<42> A resin substrate including: a resin having a refractive index of 1.60 or more,
   in which an internal transmittance IT_{w} is 83% or more for light with a wavelength of 420 nm to 780 nm.
<43> The resin substrate according to any one of <40> to <42>, in which an average internal transmittance IT₃₀₀₋₃₈₀ of light with a wavelength of 300 nm to 380 nm is 50% or less.
<44> The resin substrate according to any one of <40> to <43>, in which an average internal transmittance IT₃₀₀₋₃₂₀ of light with a wavelength of 300 nm to 320 nm is 30% or less.
<45> The resin substrate according to any one of <40> to <44>, in which an average internal transmittance IT₅₅₀₋₆₅₀ of light with a wavelength of 550 nm to 650 nm is 95% or more.
<46> The resin substrate according to any one of <40> to <45>, in which a value of (IT₄₂₀₋₇₈₀ - IT₅₅₀₋₆₅₀)/IT₄₂₀₋₇₈₀ is 5% or less.
<47> The resin substrate according to any one of <40> to <46>, in which the resin contains an episulfide resin.
<48> The resin substrate according to <47>, in which the episulfide resin has an elemental composition in which an oxygen atom content is 10% by mass or less.
<49> The resin substrate according to <48>, in which the episulfide resin is a cured product of a polymerizable composition containing an epithio compound having a thioether bond or a dithioether bond.
<50> The resin substrate according to <49>, in which a content of the epithio compound is 80% by mass to 95% by mass with respect to a total amount of the polymerizable composition.
<51> The resin substrate according to <49> or <50>, in which the polymerizable composition contains a thioether compound having a mercapto group.
<52> The resin substrate according to <51>, in which the thioether compound contains at least one kind selected from the group consisting of bis(mercaptoethylthio)mercaptopropane, bis(mercaptomethyl)-3,6,9-trithiaundecanedithiol, dimercaptoethylsulfide, bis(mercaptoethyl)dithiane, and bis(mercaptomethyl)dithiane.
<53> The resin substrate according to <52>, in which the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.
<54> The resin substrate according to any one of <49> to <53>, in which a content of the thioether compound is 10% by mass to 20% by mass with respect to a total amount of the polymerizable composition.
<55> The resin substrate according to any one of <40> to <54>, in which the episulfide resin is a cured product of a polymerizable composition containing an epithio compound having a thioether bond or a dithioether bond and a compound represented by Formula (T1): 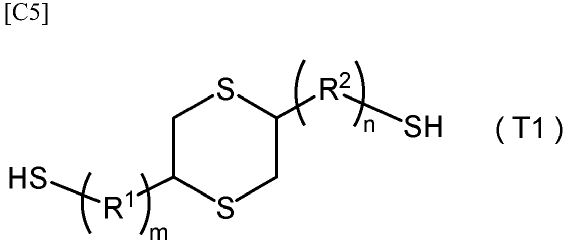 (where
   R¹ and R² are each independently a divalent hydrocarbon group having 1 to 6 carbon atoms, and
   m and n are each independently 0 or 1).
<56> The resin substrate according to any one of <40> to <54>, in which the episulfide resin is a cured product of a polymerizable composition containing an epithio compound having a thioether bond or a dithioether bond and bis(mercaptomethyl)dithiane.
<57> The resin substrate according to any one of <49> to <56>, in which the polymerizable composition contains elemental sulfur.
<58> The resin substrate according to any one of <40> to <46>, in which the resin contains a thiourethane resin.
<59> The resin substrate according to <58>, in which the thiourethane resin has an elemental composition in which an oxygen atom content is 20% or less.
<60> The resin substrate according to <58> or <59>, in which the thiourethane resin is a cured product of an isocyanate component containing an alicyclic polyisocyanate and a polythiol component.
<61> The resin substrate according to <60>, in which the alicyclic polyisocyanate is a cured product of an isocyanate component containing at least one kind selected from the group consisting of bis(isocyanatomethyl)bicyclo[2.2.1]heptane, bis(isocyanatomethyl)cyclohexane, and dicyclohexylmethane diisocyanate and a polythiol component.
<62> The resin substrate according to <60> or <61>, in which the polythiol component is a thioether compound having a mercapto group.
<63> The resin substrate according to <62>, in which the polythiol component contains at least one kind selected from the group consisting of bis(mercaptoethylthio)mercaptopropane, bis(mercaptomethyl)-3,6,9-trithiaundecanedithiol, dimercaptoethylsulfide, and bis(mercaptomethyl)dithiane.
<64> The resin substrate according to <63>, in which the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.
<65> The resin substrate according to any one of <40> to <64>, in which a content of a coloring agent having a maximum absorption wavelength of 550 nm or more and 600 nm or less in 20 ppm by mass of a toluene solution is 0.1% by mass or less.
<66> The resin substrate according to any one of <40> to <65>, further including: a ultraviolet absorber represented by Formula (1): 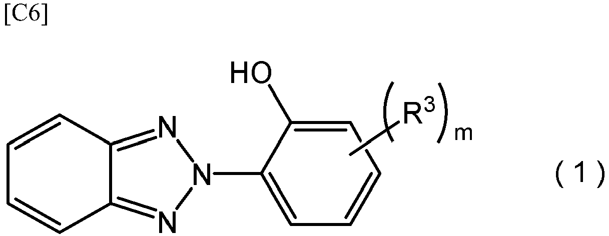 (where
   R³ is an alkyl group having 1 to 20 carbon atoms or an alkoxy group having 1 to 20 carbon atoms, and
   m is an integer of 1 to 2).
<67> The resin substrate according to any one of <40> to <66>, in which a parallelism of the resin substrate is 10 µm or less.
<68> The resin substrate according to any one of <40> to <67>, in which a thickness of the resin substrate is 0.1 mm to 2.0 mm.
<69> The resin substrate according to any one of <40> to <68>, in which the resin substrate is used for a cross reality device light guide plate.
<70> A light guide plate including: the resin substrate according to any one of <40> to <69>.
<71> A waveguide device including: the light guide plate according to <70>; and a diffraction grating or a hologram element formed on the light guide plate.
<72> An optical component for eyewear including:
   a resin lens substrate; and
   the waveguide device according to <71>.
<73> A wearable device including: the optical component for eyewear according to <72>. Examples

Although the present embodiment will be described below in more detail with reference to examples, the present embodiment is not limited to the following examples.

### <Refractive Index and Abbe Number>

The refractive index of a sample was measured using a precision refractometer "KPR-2000" (manufactured by Kalnew Optical Industrial Co., Ltd.) at 20°C with an F line (486.1 nm), a C line (656.3 nm), a d line (587.6 nm), an e line (546.1 nm), an r line (706.52 nm), a C' line (643.9 nm), and an F' line (488.0 nm). Then, the Abbe number was calculated from the following formula. $Abbe number νd = \left(nd-1\right) / \left(nF-nC\right)$

The nd denotes a refractive index measured with the d line, nF denotes a refractive index measured with the F line, and nC represents a refractive index measured with the C line.

### <Transmittance>

The transmittance of light with each wavelength was measured using a ultraviolet visible near-infrared spectrophotometer "UH4150" (trade name, Hitachi High-Tech Corporation).

### <Internal Transmittance IT_{w}>

The internal transmittance IT_{w} was calculated for each wavelength from the following expression by creating two samples having different thicknesses. [Math. 2] $log {IT}_{w} = - \frac{log {T}_{w 1} - log {T}_{w 2}}{Δd} \times 10$

With the proviso that T_{w1} is transmittance of light with a wavelength w (nm) in a measurement sample having a specific thickness, T_{w2} is transmittance of light with a wavelength w (nm) in a measurement sample having a greater thickness than T_{w1}, and Δd is a thickness difference (mm) between T_{w2} and T_{w1}. The transmittance of light with each wavelength was measured by the method described in "Transmittance" above. The internal transmittance IT_{w} indicates the value of the internal transmittance at the thickness of 10 mm.

### <Glass Transition Temperature (Tg)>

The measurement was carried out by a penetration method (sample thickness: 3 mm, pin diameter: 0.5 mm, load: 10 g, heating rate: 10°C/min) using a Thermo-mechanical analyzer, "Thermo Plus EVO2" (manufactured by Rigaku Corporation), and the temperature of the peak value where thermal expansion was changed was regarded as the glass transition temperature (Tg). The glass transition temperature was evaluated as not detectable in a case where no peak value was observed.

### [Example 1]

100.00 parts by mass of bis(β-epithiopropyl)sulfide, 15 parts by mass of bismercaptoethyldithiane, 0.03 parts by mass of tetrabutylphosphonium bromide as a catalyst, and 0.1 parts by mass of 2-(2-hydroxy-4-octyloxyphenyl)-2H-benzotriazole as an ultraviolet absorber were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. Similarly, a resin substrate having a different thickness was formed and released from the mold. The thicknesses of the resin substrates obtained were 2.90 mm and 4.98 mm, respectively.

The transmittances of the two kinds of resin substrates were measured, and the internal transmittances were calculated. The measurement results of the transmittance of the resin substrate with a thickness of 4.98 mm are shown in Fig. 4, and the calculation results of the internal transmittance are shown in Fig. 5.

The refractive indexes were d: 1.7094, C: 1.7036, F: 1.7232, e: 1.7140, r: 1.7004, C': 1.7045, and F': 1.7245, and the Abbe numbers were vd: 36.1 and ve: 35.8.

The glass transition temperature was undetectable. Note that the resin density was 1.41 g/cm³.

The various internal transmittance values were values shown in Table 1. Note that the average internal transmittance IT₃₀₀₋₃₈₀ was 0 and the average internal transmittance IT₃₀₀₋₃₂₀ was 0.

Note that the resin substrate thus obtained had low water absorbability.

### [Example 2]

50.6 parts by mass of 1,3-bis(isocyanatomethyl)benzene, 0.06 parts by mass of dimethyltin dichloride as a catalyst, 0.15 parts by mass of an acidic phosphate ester "JP-506H" (trade name, manufactured by Johoku Chemical Co., Ltd.) as a mold releasing agent, and 1.0 parts by mass of 2-(2-hydroxy-4-octyloxyphenyl)-2H-benzotriazole as an ultraviolet absorber were added, followed by mixing, dissolving, and homogenizing the mixture. Thereafter, 49.4 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol was additionally added, followed by stirring and mixing under a reduced pressure of 10 mmHg for 30 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. Similarly, a resin substrate having a different thickness was formed and released from the mold. The thicknesses of the resin substrates thus obtained were 9.44 mm and 16.17 mm, respectively.

The transmittances of the two kinds of resin substrates were measured, and the internal transmittances were calculated. The measurement results of the transmittance of the resin substrate with a thickness of 9.44 mm are shown in Fig. 6, and the calculation results of the internal transmittance are shown in Fig. 7.

The refractive indexes were d: 1.6642, C: 1.6581, F: 1.6792, e: 1.6692, r: 1.6548, C': 1.6590, and F': 1.6805, and the Abbe numbers were vd: 31.5 and ve: 31.2.

The glass transition temperature was 103°C.

Note that the water absorbability of the obtained resin substrate was higher than that of the resin substrate in Example 1.

### [Example 3]

50.6 parts by mass of 1,3-bis(isocyanatomethyl)benzene, 0.06 parts by mass of dimethyltin dichloride as a catalyst, 0.15 parts by mass of an acidic phosphate ester "JP-506H" (trade name, manufactured by Johoku Chemical Co., Ltd.) as a releasing agent, 1.0 parts by mass of 2-(2-hydroxy-4-octyloxyphenyl)-2H-benzotriazole as an ultraviolet absorber, 0.1037 parts by mass of disperse violet 27 (the maximum absorption wavelength in 20 ppm parts by mass of toluene solution was 586 nm), and 0.0013 parts by mass of solvent red 52 (the maximum absorption wavelength in 20 ppm by mass of toluene solution was 543 nm) were added, followed by mixing, dissolving, and homogenizing the mixture.

Thereafter, 49.4 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol was additionally added, followed by stirring and mixing under a reduced pressure of 10 mmHg for 30 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. Similarly, a resin substrate having a different thickness was formed and released from the mold. The thicknesses of the resin substrates thus obtained were 3.00 mm and 4.99 mm, respectively.

The transmittances of the two kinds of resin substrates were measured, and the internal transmittances were calculated. The measurement results of the transmittance of a resin substrate with a thickness of 4.99 mm are shown in Fig. 8, and the calculation results of the internal transmittance are shown in Fig. 9.

Note that the water absorbability of the obtained resin substrate was higher than that of the resin substrate in Example 1.

### [Table 1]

**Table 1**

| | Internal transmittance at 420 nm to 780 nm | | Internal transmittance at 550 nm to 650 nm | | ( IT₄₂₀₋₇₈₀ - IT₅₅₀₋₆₅₀)/IT₄₂₀₋₇₈₀ |
|---|---|---|---|---|---|
| | Average value IT₄₂₀₋₇₈₀ | Minimum value | Average value IT₅₅₀₋₆₅₀ | Minimum value | |
| Example 1 | 99.7 | 97.1 | 99.8 | 99.6 | -0.1% |
| Example 2 | 99.7 | 85.7 | 100.0 | 100.0 | -0.4% |
| Example 3 | 96.9 | 84.0 | 94.8 | 93.7 | 2.2% |

### [Example 4]

100.00 parts by mass of bis(β-epithiopropyl)sulfide, 10 parts by mass of bismercaptoethyldithiane, 0.03 parts by mass of tetrabutylphosphonium bromide as a catalyst, and 0.1 parts by mass of 2-(2-hydroxy-4-octyloxyphenyl)-2H-benzotriazole as an ultraviolet absorber were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. The thickness of the resin substrate thus obtained was 2.90 mm.

The refractive indexes were d: 1.7103, C: 1.7045, F: 1.7244, e: 1.7151, r: 1.7015, C': 1.7055, and F': 1.7257, and the Abbe numbers were vd: 35.7 and ve: 35.5.

The glass transition temperature was undetectable.

### [Example 5]

100.00 parts by mass of bis(β-epithiopropyl)sulfide, 12.5 parts by mass of bismercaptoethyldithiane, 0.03 parts by mass of tetrabutylphosphonium bromide as a catalyst, and 0.1 parts by mass of 2-(2-hydroxy-4-octyloxyphenyl)-2H-benzotriazole as a ultraviolet absorber were added, followed by stirring and mixing under a reduced pressure of 10 mmHg for 10 minutes to thereby obtain a polymerizable composition. The aforementioned polymerizable composition was injected into a cavity formed by two flat molds disposed at a predetermined interval. A resin substrate was formed by a curing reaction of the polymerizable composition, and the resin substrate was released from the molds. The thickness of the resin substrate thus obtained was 2.90 mm.

The refractive indexes were d: 1.7082, C: 1.7023, F: 1.7226, e: 1.7131, r: 1.6992, C': 1.7033, and F': 1.7239, and the Abbe numbers were vd: 34.9 and ve: 34.7.

The glass transition temperature was undetectable.

### [Example 6]

The polymerizable composition described in Example 1 was injected into a cavity formed by two molds disposed at a predetermined interval. The resin substrate was formed by a curing reaction of the raw material solution and was then released from the molds. Then, the released resin substrate was sliced using a wire saw into a plurality of resin substrates with a thickness of 1.1 mm. In order to remove a residual stress generated by scratches during processing caused by the slicing, annealing was carried out under the conditions of 170°C and 3 hours with the plurality of resin substrates stacked with spacers interposed therebetween. Thereafter, polishing was performed under a pressure of 6 kPa by a lapping machine of a double-side polishing scheme using an alumina slurry with an average particle diameter of 0.5 µm. A resin substrate having a thickness of 1.0 mm was formed by the above method. Note that flatness of the resin substrate was 3.5 µm and TTV of the resin substrate was 0.8 µm.

### Reference Signs List

- 1: Waveguide device
- 10: Light guide plate
- 24: Image display device
- 32, 52: Diffraction grating

## Claims

1. A resin substrate comprising: an episulfide resin having a refractive index of 1.60 or more.

2. The resin substrate according to claim 1, wherein the episulfide resin has an elemental composition in which an oxygen atom content is 10% by mass or less.

3. The resin substrate according to claim 1, wherein the episulfide resin is a cured product of a polymerizable composition containing an epithio compound having a thioether bond or a dithioether bond.

4. The resin substrate according to claim 3, wherein a content of the epithio compound is 80% by mass to 95% by mass with respect to a total amount of the polymerizable composition.

5. The resin substrate according to claim 4, wherein the polymerizable composition contains a thioether compound having a mercapto group.

6. The resin substrate according to claim 5, wherein the thioether compound contains at least one kind selected from the group consisting of bis(mercaptoethylthio)mercaptopropane, bis(mercaptomethyl)-3,6,9-trithiaundecanedithiol, dimercaptoethylsulfide, bis(mercaptoethyl)dithiane, and bis(mercaptomethyl)dithiane.

7. The resin substrate according to claim 6, wherein the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

8. The resin substrate according to claim 5, wherein a content of the thioether compound is 10% by mass to 20% by mass with respect to a total amount of the polymerizable composition.

9. The resin substrate according to claim 1, wherein the episulfide resin is a cured product of a polymerizable composition containing an epithio compound having a thioether bond or a dithioether bond and bis(mercaptomethyl)dithiane.

10. The resin substrate according to claim 3, wherein the polymerizable composition contains elemental sulfur.

11. A resin substrate comprising: a thiourethane resin having a refractive index of 1.60 or more.

12. The resin substrate according to claim 11, wherein the thiourethane resin has an elemental composition in which an oxygen atom content is 20% or less.

13. The resin substrate according to claim 11, wherein the thiourethane resin is a cured product of an isocyanate component containing an alicyclic polyisocyanate and a polythiol component.

14. The resin substrate according to claim 13, wherein the alicyclic polyisocyanate is a cured product of an isocyanate component containing at least one kind selected from the group consisting of bis(isocyanatomethyl)bicyclo[2.2.1]heptane, bis(isocyanatomethyl)cyclohexane, and dicyclohexylmethane diisocyanate and a polythiol component.

15. The resin substrate according to claim 13, wherein the polythiol component is a thioether compound having a mercapto group.

16. The resin substrate according to claim 15, wherein the polythiol component contains at least one kind selected from the group consisting of bis(mercaptoethylthio)mercaptopropane, bis(mercaptomethyl)-3,6,9-trithiaundecanedithiol, dimercaptoethylsulfide, bis(mercaptomethyl)dithiane, and bis(mercaptomethyl)dithiane.

17. The resin substrate according to claim 16, wherein the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

18. The resin substrate according to claim 1, wherein a content of a coloring agent having a maximum absorption wavelength of 550 nm or more and 600 nm or less in 20 ppm by mass of a toluene solution is 0.1% by mass or less.

19. The resin substrate according to claim 1, further comprising: an ultraviolet absorber represented by Formula (1): 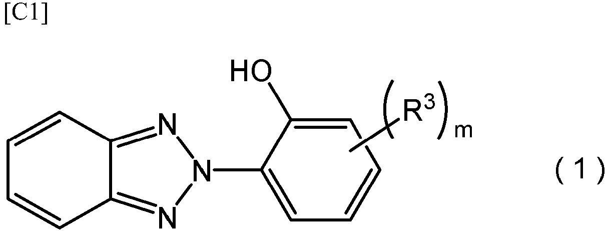 (where
R³ is an alkyl group having 1 to 20 carbon atoms or an alkoxy group having 1 to 20 carbon atoms, and
m is an integer of 1 to 2).

20. The resin substrate according to any one of claims 1 to 19, wherein an average internal transmittance IT₄₂₀₋₇₈₀ of light with a wavelength of 420 nm to 780 nm is 95% or more.

21. The resin substrate according to any one of claims 1 to 19, wherein an internal transmittance IT_{w} is 83% or more for light with a wavelength of 420 nm to 780 nm.

22. The resin substrate according to any one of claims 1 to 19, wherein an average internal transmittance IT₃₀₀₋₃₈₀ of light with a wavelength of 300 nm to 380 nm is 50% or less.

23. The resin substrate according to any one of claims 1 to 19, wherein an average internal transmittance IT₃₀₀₋₃₂₀ of light with a wavelength of 300 nm to 320 nm is 30% or less.

24. The resin substrate according to any one of claims 1 to 19, wherein an average internal transmittance IT₅₅₀₋₆₅₀ of light with a wavelength of 550 nm to 650 nm is 95% or more.

25. The resin substrate according to any one of claims 1 to 19, wherein a value of (IT₄₂₀₋₇₈₀ - IT₅₅₀₋₆₅₀)/IT₄₂₀₋₇₈₀ is 5% or less.

26. The resin substrate according to any one of claims 1 to 19, wherein a parallelism of the resin substrate is 10 µm or less.

27. The resin substrate according to any one of claims 1 to 19, wherein a thickness of the resin substrate is 0.1 mm to 2.0 mm.

28. The resin substrate according to any one of claims 1 to 19, wherein the resin substrate is used for a cross reality device light guide plate.

29. A light guide plate comprising: the resin substrate according to any one of claims 1 to 19.

30. A waveguide device comprising: the light guide plate according to claim 29; and a diffraction grating or a hologram element formed on the light guide plate.

31. An optical component for eyewear comprising:
a resin lens substrate; and
the waveguide device according to claim 30.

32. A wearable device comprising: the optical component for eyewear according to claim 31.
